Europäisches Patentamt

European Patent Office

Office européen des brevets

(11) Publication number: **0 276 851**
**A2**

## (12) EUROPEAN PATENT APPLICATION

(21) Application number: **88101238.9**

(22) Date of filing: **28.01.88**

(51) Int. Cl.4: **B64F 1/32** , B65G 69/24 , B65G 13/10 , B66F 7/08

(30) Priority: **28.01.87 US 7867**

(43) Date of publication of application:
**03.08.88 Bulletin 88/31**

(84) Designated Contracting States:
**CH DE ES FR GB LI NL SE**

(71) Applicant: **FMC CORPORATION**
**Patent Department 200 East Randolph Drive**
**Chicago, Ill. 60601(US)**

(72) Inventor: **Dean, William C.**
**780 Briarwood Court**
**Orange Forida 32763(US)**
Inventor: **Sogge, John W.**
**9119 San Ambrosio Drive**
**Orlando Florida 32819(US)**

(74) Representative: **Bardehle, Heinz, Dipl.-Ing. et**
**al**
**Patent- und Rechtsanwälte**
**Bardehle-Pagenberg-Dost-Altenburg-Frohwi-**
**tter-Geissler & Partner Postfach 86 06 20**
**D-8000 München 86(DE)**

(54) **Modular aircraft loader.**

(57) A modular aircraft loader includes a plurality of selectively interchangeable stock components that may be readily added to or removed from the loader to perform only those functions which the purchaser requires. The loaders all include front and rear platforms for orienting and moving containers between the aircraft and a supply trailer. The rear platform in one embodiment includes a plurality of helical roll clusters which selectively rotate or move a container longitudinally and transversely of the rear platform. Additionally, clusters on the front platform selectively move the containers longitudinally or transversely of the loader.

FIG_1

## MODULAR AIRCRAFT LOADER

The present invention incorporates the type of roller bed described in my Application Serial No. 781,443 filed on September 27, 1985 entitled "CONTAINER TRANSLATING AND ORIENTING APPARATUS AND METHOD" assigned to the Assignee of the present invention.

## BACKGROUND OF THE INVENTION

### Field of the Invention

The present invention relates to a modular loader capable of being modified with stock components to handle flat bottomed articles, boxes, pallets or containers (hereinafter designated containers) in accordance with the specific needs of specific customers.

### Description of the Prior Art

The present invention relates to modular loaders or more particularly to aircraft loaders of the type which load containers into side openings in the aircraft as disclosed in United States Guyaux Patent 3,666,127, or into the nose of an aircraft as disclosed in United States Anderson et al Patent 4,312,619. Both of these patents are assigned to the assignee of the present invention and are incorporated by reference herein.

The manner in which aircraft loaders are used by different airlines varies considerably in required functions. The cost of the loader is in reverse proportion to the number of functions required by the specific airline. For example, the loader disclosed in the Guyaux patent is capable of receiving and discharging containers from the right side, left side, or rear of the loader and thus requires drive means on the container supporting surface of the loader capable of supporting the container for longitudinal movement in both directions, transverse movement in both directions, and must include drive means on the front and rear platforms which may be selectively raised and lowered and may permit longitudinal and transverse movement at different times. Also the Guyaux loader requires vertically adjustable side guides and end stops on at least the rear platform to permit selective entry and discharge of the container, and requires that the container supporting beds of both front and rear platforms include means, such as caster wheels, to permit twisting of the containers for aligning the containers with the cargo opening in the aircraft.

On the other hand loaders which load and discharge containers only from the rear end of the platform require a vertically movable rear stop but need not use relatively expensive vertically movable side guides as opposed to fixed side guides. Also, this type of loader does not require power driven side feed rollers and means on the loader bed for moving the container transversely of the loader. Thus, removal of the unneeded powered equipment considerably reduces the overall cost of the loader.

## SUMMARY OF THE INVENTION

The modular loader of the present invention is specifically designed to permit a purchaser of the loader to specifically order only those components which are needed on his loader to satisfy his specific loading and/or unloading requirements. In this way the purchaser's cost is determined by his specific loading requirements, and this minimizes his overall costs for performing a specific loading job. Also, if the purchaser's loading requirements change, the purchaser may order different components from stock and add/or remove components from his basic loader thereby adapting his loader to meet the new requirements at a minimum cost.

## BRIEF DESCRIPTION OF THE DRAWINGS

Figure 1 is a side elevation of the modular loader of the present invention adapted to load relatively small containers into an aircraft or the like, front and rear platform being illustrated in their lowermost positions.

Figure 2 is a side elevation of the loader with the platforms in elevated positions for loading containers into or unloading containers from the cargo opening of an aircraft.

Figure 3 is a plan view of the loader illustrating a loader capable of receiving and discharging containers from either side and from the rear end of the loader.

Figure 4 is a diagrammatic exploded view of the rear platform illustrating a plurality of stock parts which can be added to or removed from the rear platform in accordance with the customers intended use of the loader.

Figure 5 is an exploded perspective of fragments of the two side walls illustrating the manner of connecting anti-skid interlocking struts, rollers and roller drives to the side walls of the rear platform.

Figure 6 is an exploded perspective illustrating the manner of selectively mounting several components on the outside surfaces of one of the side walls of the rear platform.

Figure 7 is a plan of the rear portion of the rear platform with non-skid deck plates removed to illustrate a four zone helical roll section.

Figure 8 is a perspective of a helical roll cluster.

Figure 9 is a perspective of a hydraulically actuated rear platform lift mechanism with the center cylinder moving into position to lower a rear stop on the front platform.

Figure 10 is a diagrammatic operational view of the lift mechanism in its lowermost position.

Figure 11 is a view similar to Figure 10 but with the rear platform lifted to an intermediate position.

Figure 12 is a view similar to Figure 10 but with the rear platform raised an additional amount.

Figure 13 is a plan of a simplified and inexpensive rear platform limited to end feed and discharge only.

Figure 14 is a plan of a simplified platform limited to feed and discharge from one side only.

DESCRIPTION OF THE PREFERRED EMBODIMENT

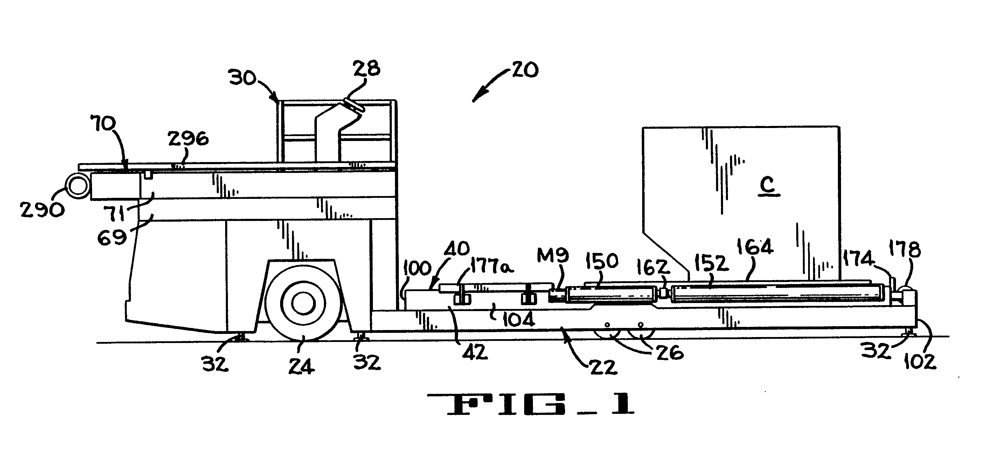

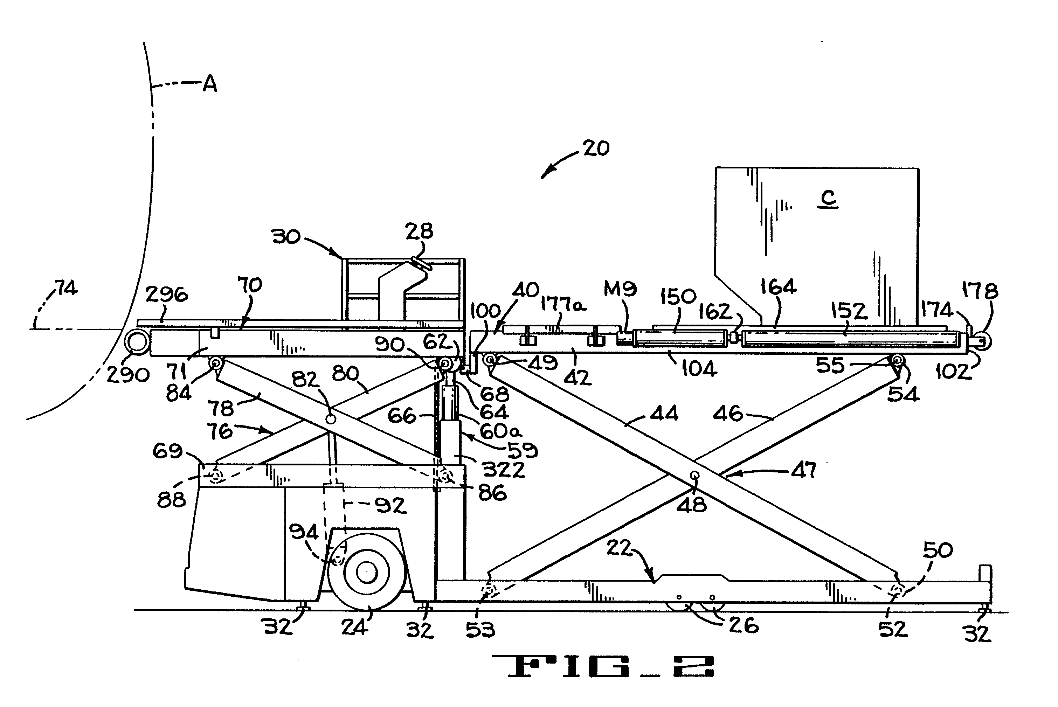

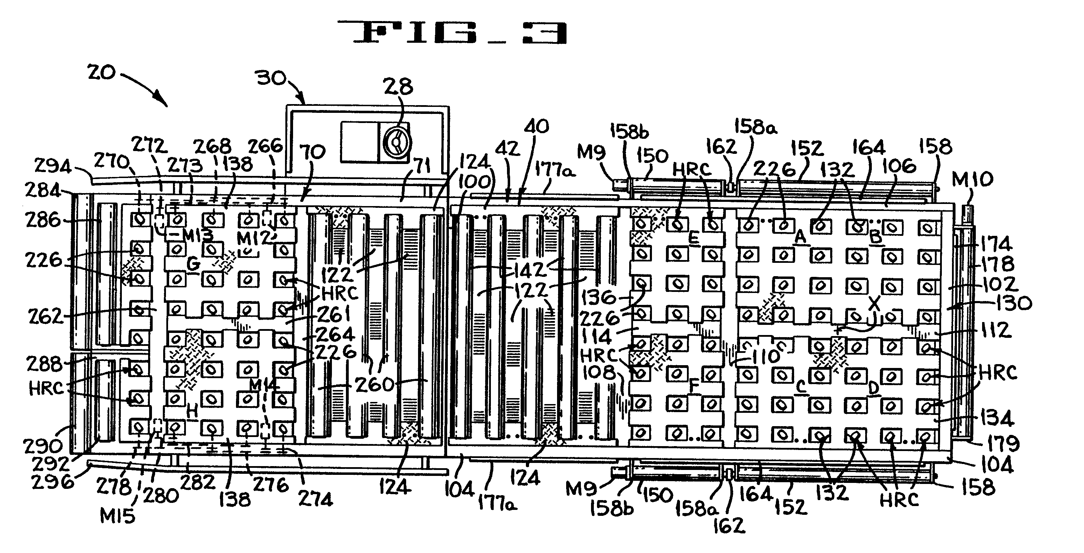

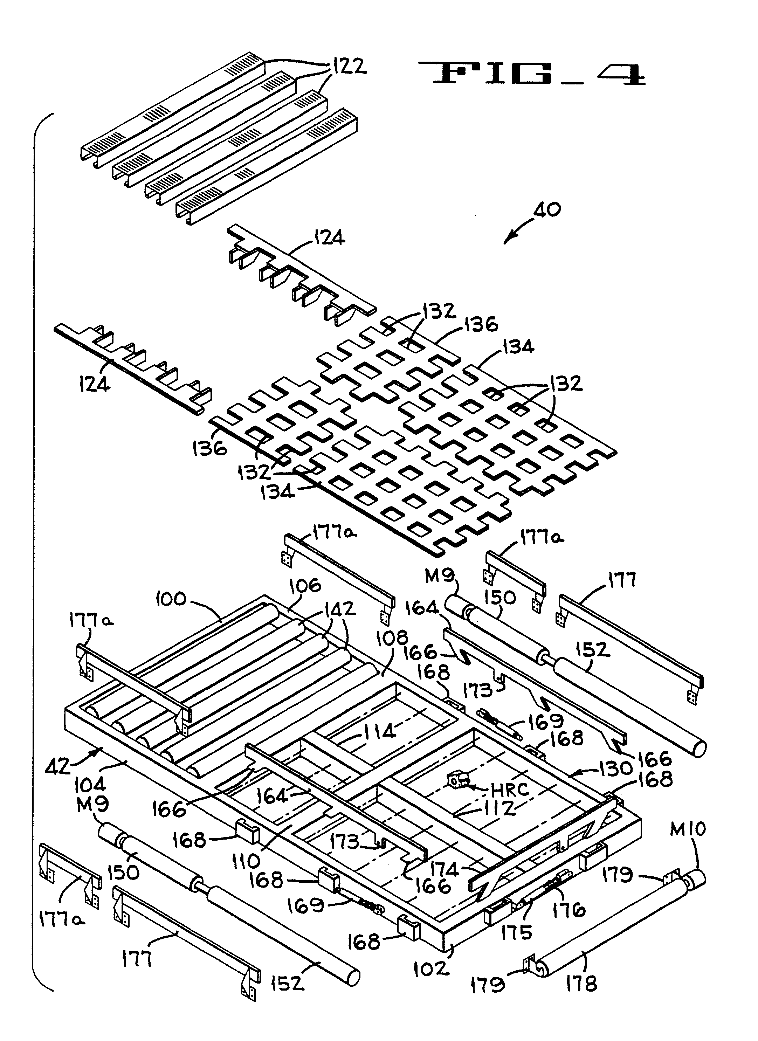

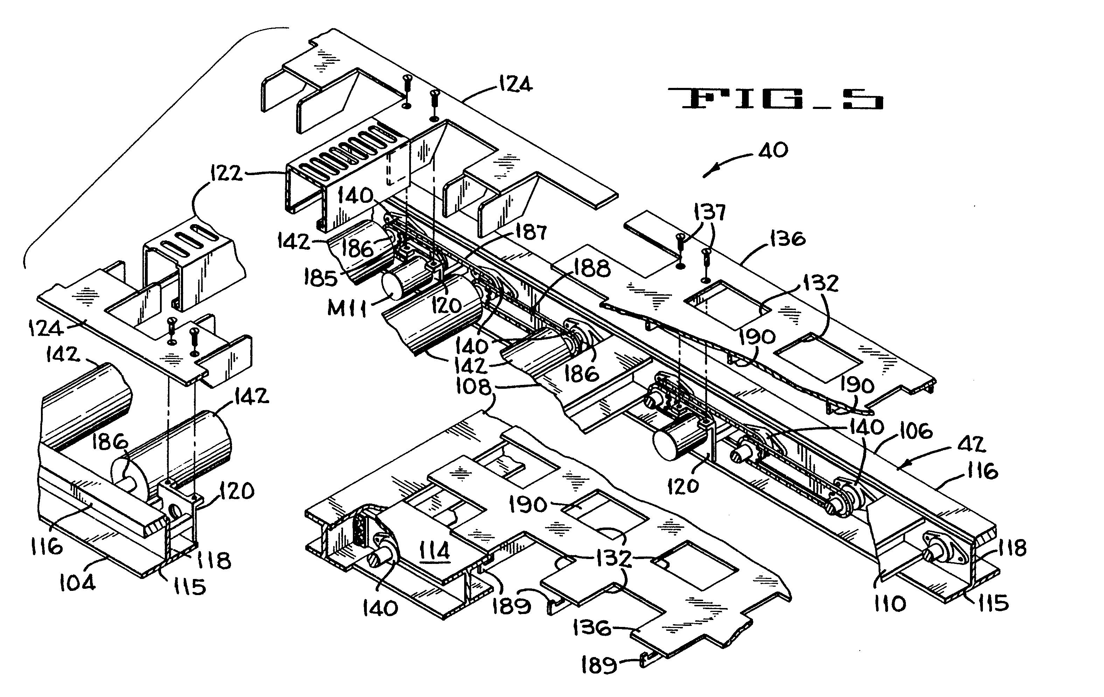

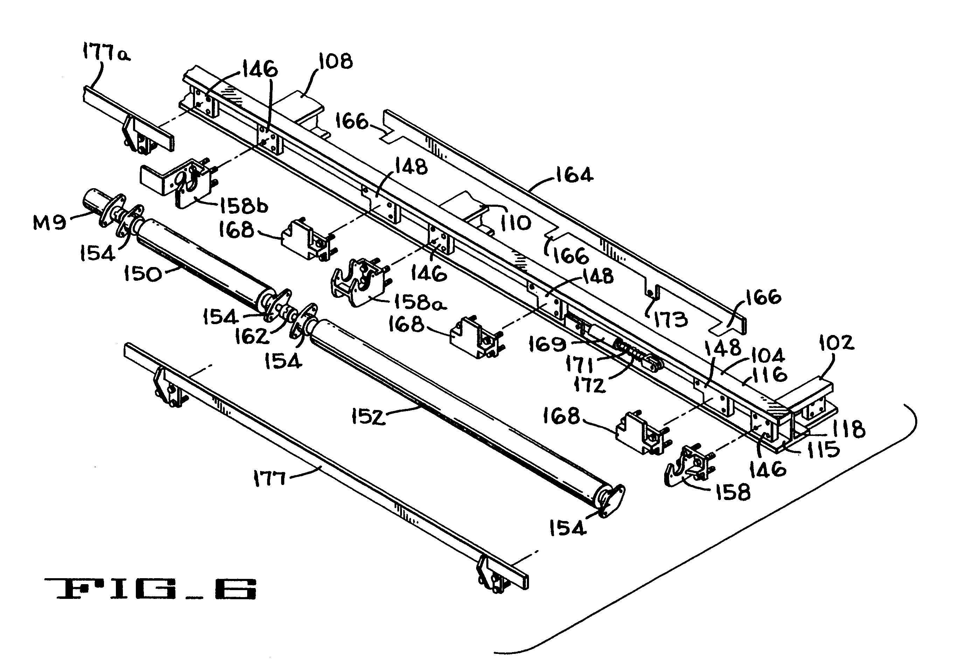

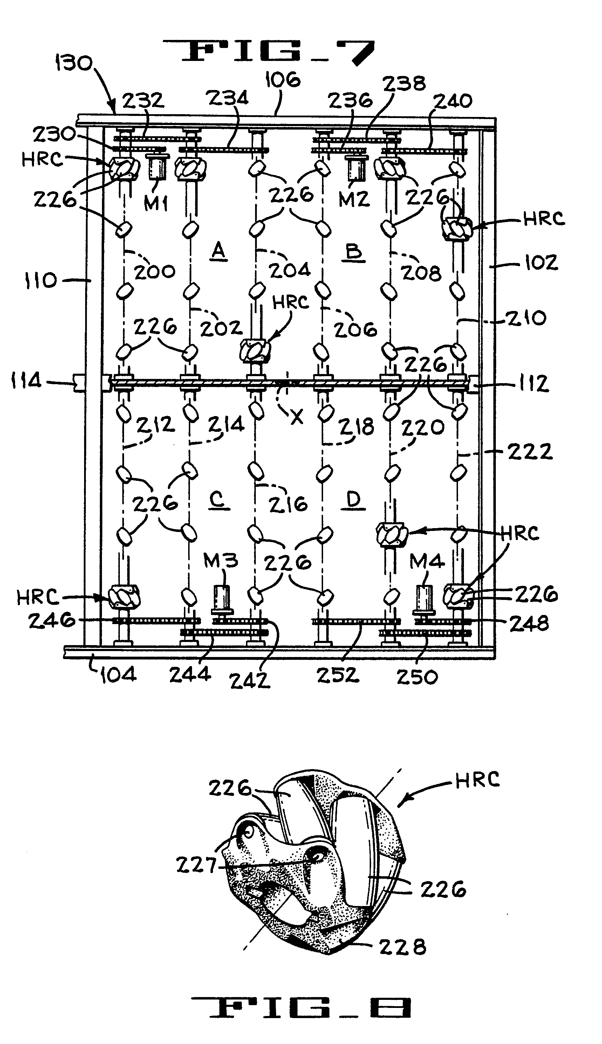

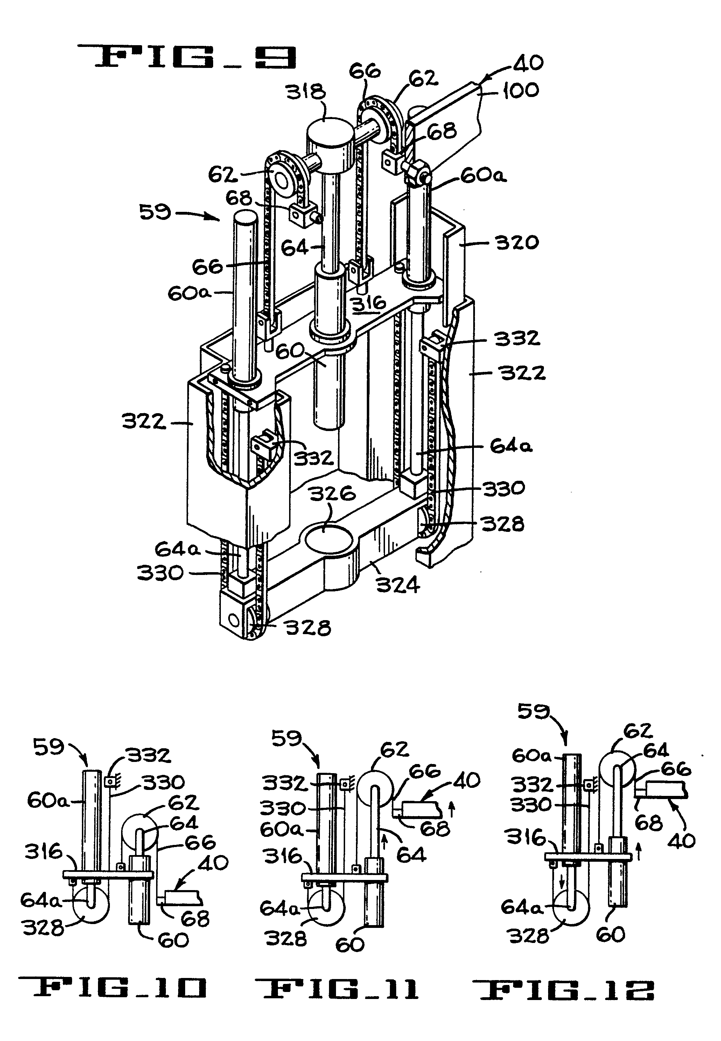

The modular aircraft loader 20 (Figs.1 and 2) of the present invention moves container C into and out of a cargo door of an aircraft A (Fig. 2). The loader 20 comprises a chassis 22 supported on a pair of steerable front drive wheels 24 and two pairs of freely rotatable wheels 26. The drive wheels are driven by a conventional engine and drive train (not shown) which is controlled by an operator who has conventional controls including a steering wheel 28 and hydraulic controls for operating several hydraulic motors and cylinders incorporated in the vehicle. The steering wheel and other conventional controls are located in an operator's station 30. It will be understood that the engine (not shown) drives a generator and a hydraulic pump which directs fluid to several cylinders and hydraulic motors to be described hereinafter. When the loader is in position to load containers into or unload containers from the aircraft A as indicated in Figure 2, the loader is leveled and supported by stabilizing jacks 32.

The loader 20 includes a rear platform 40 (Figs. 1 and 2) having a horizontally disposed rectangular platform frame 42 pivotally connected to the upper ends (Fig. 2) of two pair of side by side (only one pair being shown) beams 44,46 of a scissors lift mechanism 47 which are pivoted together by pins 48. The upper forward end of each beam 44 is pivotally connected to the rear platform frame 42 by a pivot pin 49, and the lower rear end of each beam 44 has a roller 50 journaled thereon by a pin 52 an rolls along a horizontal track (not shown) on the loader chassis 22 when the rear platform 40 is raised or lowered. Similarly, the forward lower end of each beam 46 is pivotally connected to the loader chassis 22 by a pin 53 and the rear end of each beam 46 has a roller 54 journaled thereon by a pin 55 and rolls on the lower surface of the rear platform 40 when the platform is raised and lowered.

The rear platform 40 includes a rear platform elevator 59 (Figs. 2 and 9) which is raised and lowered by hydraulic means which includes a plurality of hydraulic cylinders 60,60a (only one being shown in Figure 2) operatively connected to a pair of wheels 62 (only one being shown in Figure 2) journaled on the piston rod 64 of the cylinder 60. A pair of chains 66 (only one being shown) are each trained over associated wheels 62 and have their upper ends rigidly secured to the platform 40 by a bracket 68. The lower end of each chain 66 is indirectly connected to the chassis 22 of the loader 20 as will be described in detail hereinafter. Thus, vertical movement of the hydraulic cylinders cause the rear platform to move up or down at twice the speed of the piston rods 64,64a of the cylinders 60,60a (Fig. 9) as will be described later.

As best shown in Figure 2, the chassis 22 includes a raised, generally horizontal portion 69 positioned over the front drive wheels 24 and below a front platform 70. The front platform includes a rectangular frame 71 that is moved between a lower transport position resting on the horizontal portion 69 of the chassis 22 as illustrated in Figure 1, and a raised position having its container supporting surface in planar alignment with a cargo receiving floor 74 of the aircraft A as shown in Figure 2.

In order to raise or lower the front platform 70, a scissors lift mechanism 76 interconnects the raised chassis section 69 with the front platform 70. The scissors lift includes two pairs of beams 78,80 pivotally connected together by two axially aligned shafts 82 (only one being shown). The upper end of the beams 78 are pivotally connected to the forward portion of the frame 71 of the front platform 70 by pins 84, and rollers 86 journaled on the lower ends of the beams 78 roll on horizontal tracks (not shown) in the horizontal portion 69 of the chassis 22. Similarly, the lower end of the beams 80 are pivotally connected to the chassis portion 69 by pins 88 and the upper ends of the beams 80 have rollers 90 journaled thereon, which rollers ride on the under surface of the frame 71 of the front platform 70. The front platform 70 is raised and lowered by a pair of hydraulic cylinders 92 (only one being shown) having their piston rods pivotally connected to the scissors lift mechanism 76 at points concentric with the shaft 82. The lower ends of the cylinders 92 are pivotally connected to the chassis 22 at 94.

The above described components of the loader perform functions which are conventional in the art taught by Assignee's Guyaux Patent 3,666,127, but the components for performing the function are unique to Applicant's apparatus.

An important feature of the invention to be described below is the concept of adapting the basic loader 20 as thus far described, with different types of container conveying and guiding components. Thus, each loader may be tailored to the specific functions which the owner requires in a loader for performing only those container handling functions which the owner wishes thus basing the cost of the loader on the functions it performs. In order to tailor the container conveying and guiding components to the purchaser's needs, a plurality of stock parts are provided, and the frames 71 and 42 of the front and rear platforms are premachined to receive all components that may be needed thereon.

As diagrammatically illustrated in Figure 4, the several components which may be assembled on either platform are illustrated as either connected to or exploded from the frame 42 of the rear platform 40.

The rear platform includes the generally rectangular frame 42 (Fig. 4) having a front end wall 100, a rear end wall 102, a left side wall 104 and a right side wall 106 welded together. The frame 42 also includes a pair of transversely extending intermediate beams 108,110 welded to the side walls 104,106. A longitudinally extending beam 112 is bolted to the rear wall 102 and to the intermediate beam 110, while a second longitudinally extending beam 114 is likewise bolted to the transverse beams 108 and 110.

As best shown in Figures 5 and 6, each side wall 104,106 is fabricated from a split I-beam 115 (i.e., rectangular longitudinally extending bar 116 welded to the outer surface of the I-beam's web 118. A plurality of motor mounting bracket 120 (Fig. 5) are welded to the inner surfaces of the side walls 104 and 106 for supporting hydraulic motors and a plurality of transversely extending interlocking struts 122 with anti-skid surfaces. The struts and cooperating non-skid decking 124 are bolted to the brackets 120 and frame 42 at locations where needed as best shown in Figure 3.

In accordance with the embodiment of the invention illustrated in Figures 1-4, a plurality of driven helical roll clusters HRC (Figs. 7 and 8) are journaled in the rear portion of the rear platform 40, and other helical roll clusters are journaled in the forward portion of the front platform 70. The helical rolls and their operation will be described in more detail hereinafter. The rearmost section 130 contain helical roller clusters HCR, portions of which project upwardly through holes 132 (Figs. 3, 4 and 5) in non-skid deck plates 136 accommodate second groups or zones of helical roller clusters HRC which project through holes 132 therein. The helical rollers in the front platform 70 likewise project through holes in non-skid deck plates 138 that are bolted to the front platform.

The webs 118 (Fig. 5) of the side walls 104,106 are predrilled with pairs of spaced holes (not shown). Bearings 140 are bolted in alignment with the holes in the side walls and support either power driven elongated rolls 142 or one end of a plurality of shafts upon which a plurality of helical roll clusters HRC are rigidly mounted.

The external portions of both side walls 104,106 of the rear platform 40 have groups of square pads 146 (Fig. 6) and J-shaped pads 148 welded thereto. If the containers are to be side loaded and unloaded from either side (or the rear end) of the rear platform 40, driven side feed rollers 150,152 are mounted on each side wall. The feed rolls 150,152 are journaled in bearings 154 (Fig. 6) bolted to hook shaped brackets 158,158a and 158b, which brackets are bolted to the associated ones of the square pads 146. Independently controlled motors M9 (Fig. 3) are bolted to each bracket 158b, which bracket includes a motor protection guard. The shafts of each roll 150,152 are coupled together by flexible couplings 162.

Vertically adjustable side guide rails 164 (Figs. 4 and 6) each include downwardly inclined legs 166 which are slidably received in inclined notches in blocks 168 bolted to the J-shaped pads 148 (Fig. 6) of the side walls 104,106. It will be noted that the right and left guide rails 164 and blocks 168 are identical stock items, and accordingly the inclined legs 166 and the slots in the two guides are inclined in opposite directions when mounted on the rear platform as illustrated in Figure 4. A hydraulic cylinder 169 with its piston rod 171 urged outwardly by spring 172 with its piston rod 171 urged outwardly by spring 172 is connected to one of the blocks 168 and to a tab 173 on the associated adjustable side guide rails 164. Thus, the springs normally hold the guide rails 164 in raised guiding positions , while hydraulic fluid directed into the cylinders 69 retracts the guide rails thereby permitting side feeding and discharging of the containers C.

Similarly, an adjustable rear guide rail 174 is movably secured to the rear end wall 102 and is operated by a hydraulic cylinder 175 having its rod normally extended by a spring 176. In the event the containers C are to be loaded or unloaded only from the rear end of the rear platform 40, it will be understood that the motors M9, rollers 150,152 and their brackets; the adjustable guides 164, the cylinders 169 and their guides 168, are not used. When operating in this manner the fixed guides 177,177a and their brackets (which are welded thereto) are bolted to the pads 146 (Fig. 6). All containers C are then moved onto and off of the rear platform 40 over a drive rear roller 178 journaled in bearings on the end wall 102 by brackets 179 bolted to end wall 102. A motor M10 is secured to one of the brackets 179 and is coupled to the roller 178.

As illustrated in Figures 3 and 5, a plurality of driven rollers 142 are disposed between the anti-skid struts 122 on the rear platform 40. Each roller 142 is journaled in bearings 140 bolted to the side walls 104,106 through holes pre-drilled therein. The rollers 142 are driven by a reversible hydraulic motor M11. As shown in Figure 5 a first chain drive 185 connects the motor M11 to one of plurality of roll shafts 186. The several roll shafts 186 are interconnected by chain drives 187,188 thus driving all rollers 142 in the same direction and at the same speed.

The non-skid deck plates 124, 134, 136, (Fig. 4) are easily assembled to the rear platform 40 by tilting the plates, for example plate 136 (Fig. 5) so that notched extensions 189 of plate reinforcing ribs 190 extend under the upper flanges of the central longitudinally extending I-beams 114 with the end surfaces of the plate 136 contacting the upper I-beam flange. The outer end of the plates 136 are then bolted to an associated motor mounting brackets 120 by two capscrews 137. The other deck plates 124, 134, 136 and 138 on the front platform 70 and rear platform 40 are similarly mounted.

In the embodiment of the invention illustrated in Figures 1-4, the rear platform 40 includes the four quadrant helical roll section 130 capable of selectively rotating the container C about an axis X (Figs. 3 and 7), moving the containers longitudinally in either direction, laterally in either direction, and moving the containers diagonally of axis X in four different directions. Figure 7 illustrates the drive mechanism for four zones A, B, C and D of helical roller section 130 with the non-skid deck plates 134 being removed.

As shown in figure 7, a plurality of shafts 200, 202, 204, 206, 208, 210 are journaled between the side wall 106 and the central wall 112. Similarly, shafts 212, 214, 216, 218, 220 and 222 are journaled between the side wall 104 and the central wall 112.

A plurality of the helical roll clusters HRC (Figs. 7 and 8) each having six helical barrel shaped rollers 226 are rotatably received on a cluster casting 228 by pivot pins 227. The helical roll cluster HCR include right hand clusters and left hand cluster. The left hand clusters are mounted on shafts 206,208, 210, 212, 214, 216; and the clusters on shafts 200, 202, 204, 218, 220, and 222 are right hand clusters. As shown in Figure 7, four helical roll clusters HRC are mounted on each shaft, with certain of the clusters being illustrated only by an uppermost one of the rollers 226 in position to engage and support the flat bottom surface of a container, pallet, flat bottomed article or the like.

The helical roll cluster HRC on shafts 200, 202, 204, all have the axes of their uppermost rollers 226 angled at approximately 45° to the right relative to the central wall 112 and lie in a container supporting zone A. The axes of the uppermost rollers 226 of the clusters HRC secured to the shafts 218, 220, 222 in zone D are parallel to those in zone A. Similarly, the axes of the upper rollers 226 of the clusters keyed to shafts 206, 208, 210 in zone B; and the axes of the upper rollers 226 keyed to the shafts 112, 114 and 116 in zone C are parallel to each other and normal to the axes of the upper rollers 226 in zones A and D. Thus, the clusters HRC in zones A and D are right hand clusters while the clusters in zones B and C are left hand clusters.

As illustrated in Figure 7, a first hydraulic motor M1 in zone A is secured to the rear platform side wall 106 and is connected to shaft 200 by a first chain drive 230. A second chain drive 232 connects shaft 200 to shaft 202, while a third chain drive 234 connects shafts 202 and 204 together. Thus, all shafts and rollers 226 of zone A will be rotated in the same direction and at the same speed by motor M1 while driven in either direction under the control of control means. The control means is the same as that described in the above mentioned John W. Sogge application entitled CONTAINER TRANSLATING AND ORIENTING APPARATUS AND METHOD, which application was filed on September 27, 1985 having Serial No. 781,443 and is incorporated by reference herein. Furthermore, when the motor M1 is driven in a clockwise direction (when observing the shafts 200,202,204 from the lower end of the Figure 7) all of the rollers 226 in zone A rotate clockwise at the same speed; and when driving the motor M1 in a counterclockwise direction all of the rollers in zone A are driven in a counterclockwise direction.

Similarly, an independently controlled reversible hydraulic motor M2 drives shafts 206, 208, 210 in zone B through chain drives 236, 238, 240, in the same direction and at the same speed either in a counterclockwise or clockwise direction. A hydraulic motor M3 drives the shafts 212, 214, 216 and rollers 226 in zone C at the same speed and in the selected direction by chain drives 242, 244, 246 depending upon the direction of rotation of the motors M3; and a hydraulic motor M4 drives shafts 218, 220, 222 and rollers 226 of zone D through chain drives 248, 250, 252, in the selected direction and at the same speed. As will be described hereinafter, all of the motors, when driven, will drive the rollers in their zones in the selected direction and at the same speed as the rollers in one or more of the other zones.

Prior to describing the several directions in which a container (or other flat bottomed article) may be propelled while supported on the rollers 226, it is believed that it would be helpful in understanding the invention to briefly describe the driving forces exerted by the freely rotatable rollers 226 on the bottom of the containers.

Having reference to Figure 7, if motor M1 drives all helical roll clusters HRC and thus the rollers in zone A in a clockwise direction, the trailing end (i.e., the lower left end in Figure 7) of each rollers 226 that is in contact with the container, will be moved upwardly into driving contact with the container while the forward ends (i.e., the right ends of the rollers in zone A) will be moved downwardly away from the container. Thus, the driving forces of the uppermost rollers in Zone A will be parallel with the axes of the freely rotatable uppermost rollers and will be directed upwardly to the right as viewed in Figure 7. If the helical roll clusters HRC of rollers 226 in zone A are driven in a counterclockwise direction the driving force against the container will be diagonally downwardly and to the left as viewed in Figure 7.

The several directions in which a container supported on the rear platform 40 (Fig. 7) can be driven will now be described.

When it is desired to drive the containers to the right (Fig. 7) all shafts in zones A, B, C, and D are driven in a clockwise direction (viewed from the bottom of Figure 7) thus moving the container to the right.

If the container is to be driven to the left, all shafts in zones A, B, C and D are driven in a counterclockwise direction.

Although the container or other article is not intended to be moved diagonally on the subject aircraft loader 20, the helical roll clusters are capable of moving the container diagonally. Accordingly, the manner of driving the several shafts to perform this function will be described.

If the container is to be driven diagonally, upwardly to the right at a 45° angle, all of the shafts and their rollers in zones A and D will be driven in a clockwise direction, while the rollers in zones B and C will be held stationary. It will be appreciated that the freely rotatable rollers 226 in zones B and C will provide support but no driving force to the container and will freely roll permitting the containers to be driven upwardly and to the right (Fig. 7).

If the container is to be driven diagonally downward to the left, the shafts and their rollers in zones A and D will be driven in a counterclockwise direction and the shafts in zones B and C will be held stationary allowing the supporting rollers in zone B and C to freely roll.

If the container is to be driven diagonally to the left, the shafts in zones B and C are driven in a clockwise direction and the shafts in zones A and D are held for rotation.

When the container is to be driven diagonally downwardly and to the right, the shafts in zones B and C are driven in a clockwise direction and the shafts in zones A and D are held stationary.

When the container is to be driven in a clockwise direction about vertical axis X, the shafts in zones A and B driven in a clockwise direction, and the shafts in zones C and D are driven in a counterclockwise direction.

When the container is to be driven in a counterclockwise direction about vertical axis X, the shafts in zones A and B are driven in a counterclockwise direction and the shafts in zones C and D are driven in a clockwise direction.

When the container is to be driven upwardly (Fig. 7), the shafts in zones A and D are driven clockwise, and the shafts in zones B and C are driven counterclockwise.

When the container is to be driven downwardly, (Fig. 7) the shafts in zones A and D driven counterclockwise, and the shafts in zones B and C are driven clockwise.

As shown in Figure 3, two additional zones E and F are incorporated in the invention to handle longer containers. The rollers in zones E and F are independently driven and controlled, with the rollers 226 oriented in the same directions a the rollers in zones B and C and A, D, respectively. For this reason and since the components are the same as those in zones B and C, the components of zones E and F will not be described in detail.

When containers supported on the rollers 226 of the rear platform 40 having zones A-F therein, the rollers 226 will be used primarily to move the container longitudinally or transversely of the platform 40. Accordingly, only these functions will be described. It will be understood that the platform may be much longer if desired so that many additional zones may be added thereto for moving containers longitudinally of the platform and transfer them off the platform either to the right or to the left.

If the container is to be driven to the right (Fig. 3) all shafts in zones A, B, C, D. E and F are driven in a clockwise direction as viewed from the bottom of Figure 3.

If the container is to be driven to the left, all shafts in all of the zones are driven in a counterclockwise direction.

The front platform 70, (Fig. 3) its frame 71, and the components thereon are similar to those of the rear platform 40. Accordingly, the front platform and its components will not be described in detail. The front platform supports a plurality of full width rollers 260 separated by non-skid struts 122 held in place by non-skid decking 124. Two helical roller zones G and H have roll shafts (not shown) which are journaled to the side walls of the frame 71 and to a longitudinally extending center wall 261 which is bolted between a front wall 262 and a transversely extending intermediate wall 264. A plurality of helical roll clusters HRC (four being illustrated on each shaft) each include a plurality of rotatable helical rolls 226 thereon with the uppermost rollers projecting through holes in the non-skid decking 138.

However, the manner of driving the helical rolls in the front plate 70 differs from that in the rear platform 40 in that the angles of the uppermost helical rollers 226 differ in alternate rows of rollers as indicated in Figure 3. A reversible hydraulic motor M12 drives the rearmost row of helical clusters HRC and alternative rows of roll clusters in zone G in the same direction and at the same speed by chain drives 266, 268 and 270; and motor M13 drives the intermediate rows of clusters in the opposite direction through chain drives 272,273. Similarly the rearmost helical row cluster HRC in zone H alternate rows of helical rollers are driven in the same direction as their aligned rows in zone G by motor M14 and chain drives 274, 276, 278; while the intermediate rows are driven in opposite direction by motor M15 and chain drives 280,282.

As indicated in Figure 3, the right front end of the front platform 70 has a resilient bumper tube 284 rigidly secured thereto followed by a driven elongated roller 286. The left front end of the front wall 262 of the platform has a narrow frame 288 pivoted to the main body of the front platform 70. The narrow frame supports a short jumper tube 290 which is followed by short driven roller 292. The narrow frame 288 is pivoted between the illustrated horizontal position (not shown) by means (not shown). When the narrow frame is in its vertical position, the loader may load relatively small containers in small aircraft when in areas obstructed by wing fairing or the like. Side guides 294 and 296 are provided on the front platform for guiding the containers into and out of the aircraft. When the narrow frame 288 is in its vertical position, the front end of the side guide 294 may be pivoted inwardly to a location adjacent the right end of the resilient bumper tube 284.

As best shown in Figures 2 and 9-12, the rear platform elevator 59 includes the hydraulic cylinder 60 which is rigidly supported on a first or upper transverse beam 316 with its piston rod 64 directed upwardly and secured to a cap 318 having the wheel 62 journaled thereon. The chains 66 are trained over the wheels 62, each having one end anchored to the front end wall 100 of the rear platform 40 and the other end anchored to the upper beam 316. Each end of the upper beam 316 is rigidly secured to an inner channel member 320 (only one being shown) which is slidably received within an outer channel guide 322 that is rigidly secured to the chassis 22 of the loader 20. Suitable bearing pads (not shown) are disposed between each pair of channel members 320, 322. A pair of smaller outer hydraulic cylinders 60a have their cases rigidly secured to the upper beam 316 with their rods 64a projecting downwardly therefrom and connected to a lower transverse beam 324 having a large diameter hole 326 therein to receive the lower portion of the cylinder 60 when the platform is in its lowermost position. A pair of wheels 328 are journaled on the lower beam 324 and receive second chains 330. Each chain 330 has one end anchored to the upper beam 316 while the other end is anchored to the chassis 22 by a bracket 332 preferably connected to the inner surface of the outer channels 322 of the chassis.

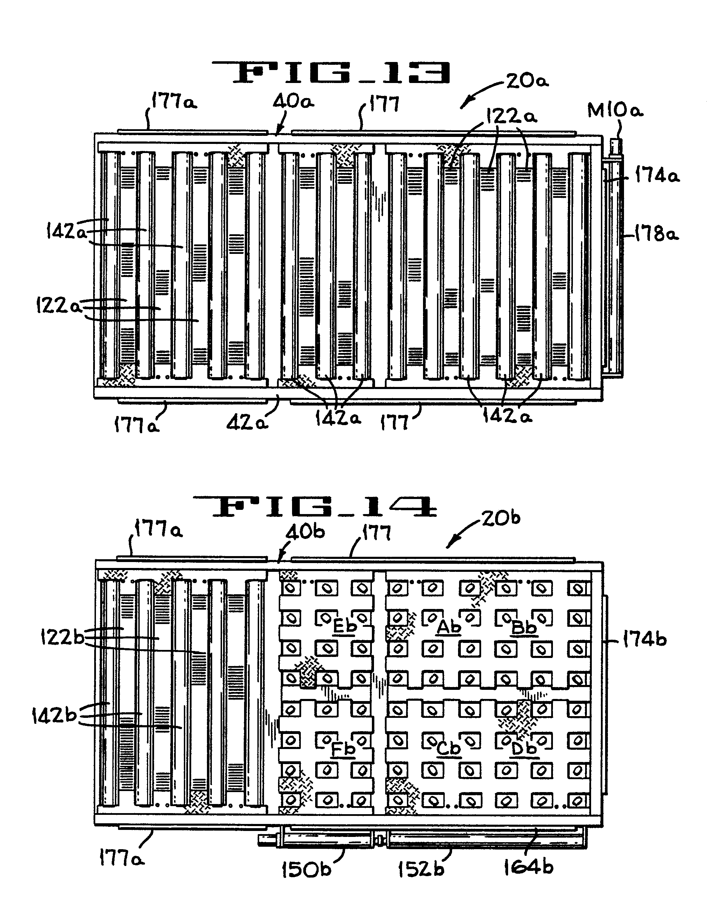

As diagrammatically illustrated in Figures 10-12, when the rear platform 40 (Fig. 10) is in its lowermost position, the piston rods 64.64a are retracted within their cylinders 60,60a. When the piston rod 64 is fully extended, the chains 66 raise the rear platform 40 twice the distance of the stroke of the piston rod 64 as shown in Figure 11. When the piston rods 64a are extended a desired distance to raise the rear platform to the level of the front platform 70, the pistons 60,60a and the upper beam 316 are moved as a unit twice the distance of the stroke of the piston rod 64a as illustrated in Figure 12. The above described operation is reversed when the rear platform is lowered.

As mentioned previously, the rear platform 40 of the loader 20 as illustrated in Figures 1-3 may receive and discharge container C from the rear end, or either side of the rear platform. This embodiment of the loader is of course the most expensive because of the use of helical roller zones A-F (Fig. 3), their side rollers 150,152; the end roller 178, the vertically movable side guides 164 and end guide 174; and their required motors, cylinders and controls.

The most inexpensive loader 20a (Fig. 13) is similar to the loader 20 except that the loader receives or discharge containers only from the rear end of the platform 40a. Thus, a plurality of elongated rollers 142a and interlocking struts 122a are inserted in the rear platform frame 42a in place of the components included in the helical roller zones A-F. Also, fixed side guides 177, 177a are used in place of the movable side guides 164 (Figs. 3, 4 and 6), hydraulic cylinders 169, side rollers 150,152, motors M9, longitudinal beams 112,114 and connecting brackets.

If a loader 20b is to be used for receiving and discharging containers from one side only as illustrated in Figure 14, a fixed rear guide 174b is mounted on the rear of the platform 40b, and fixed side guides 177,177a are mounted on one side of the rear platform 40b while the movable side guide 164b and driven rollers 150b,152b are mounted on the other side. The driven rear roller 178 (Fig. 3 and 4), the movable rear guide 174, one pair of movable side rollers 150,152 and one movable side guide 164 and their attached power means and brackets are removed from the Figure 14 embodiment of the loader.

In the event only relatively short containers such as container C (Fig. 1) are to be transferred onto off the rear platform 40, the helical roll zones E and F (Fig. 3) may be removed from the Fig. 1-3 and 14 embodiments of the invention.

In operation of the first embodiment of the container loader 20 Figs. (1-3) in its preferred mode as an aircraft loader, the loader is first driven to a position adjacent the cargo door or an aircraft A (Fig. 2). The loader is then leveled and supported on the stabilizer jacks 32. The front platform 70 is then raised to a position adjacent the cargo opening in the aircraft and level with the cargo floor 74 by actuating the hydraulic cylinders 92. With the rear platform in its lowermost position as illustrated in Figure 1, container trailers (not shown) such as disclosed in the aforementioned Guyaux patent 3,666,127 move a container C into transfer position immediately adjacent the rear end, or either side, of the rear platform 40.

If the trailer is moved adjacent the rear end of the rear platform 40, the operator actuates controls to raise the side guides 164 (Fig. 3) on both sides of the rear platform, to lower the end guide 174, to drive the rear roll 178 and the helical roll clusters HRC in at least zones A-B in the directions which will move the container A toward the front platform 70. Unless the trailer (not shown) has a power deck, an assistant physically pushes the container off the trailer and onto the driven rear roll 178 and the uppermost helical rollers 226 of the helical roll cluster HRC.

The helical roll clusters HRC may then be driven in the proper direction to orient the container C in the desired position on the rear platform 40. For example, the beveled wall of the container C (Fig. 1) may be desired to be positioned rearwardly rather than forwardly of the rear platform as illustrated in Figure 2. Accordingly, controls are actuated to drive the helical roll clusters HRC 180° thereby positioning the beveled wall rearwardly.

The container C is preferably guided by the right guide rails 164,177a and 294 on the front platform when moving the container into the aircraft A. Accordingly, after the container is properly oriented, the helical roll clusters HRC are driven in directions which will move the container against the right guide rails. The rear platform 40 is then raised to the level of the front platform 70 by the rear platform elevator 59 (Figs. 2 and 9).

The operator then actuates other controls to drive all helical roll clusters HRC (Fig. 3) on the front and rear platforms, and all of the long rolls 142,260 in the forward direction to move a container onto the helical rollers in zones G and H. If the container is not in proper alignment with the cargo opening of the aircraft, the helical roll clusters HRC in zones G and H may be driven in appropriate directions to move the containers transversely of the platform 70 into alignment with the cargo opening in the aircraft. After the container is properly aligned, the front platform helical roll clusters HRC and the end roller 286 and/or end roller 292 are driven in directions which will drive the container C onto a conveyor system (not shown) on the floor 74 (Fig. 2) of the aircraft A.

When a container C is to be unloaded from the aircraft A, the above operation is substantially reversed, with the container being moved over the rear end of the rear platform onto a trailer (not shown).

If a trailer is positioned along one side of the rear platform when at its lowest elevation, for example the left side, the loading operation is the same as that described above except the movable rear guide 174 (Fig. 3) and right side guide 164 are raised, and their associated rollers 150,152 and 178 are not driven. The left guide 164 is lowered, and the left side rollers 150,152 and helical roll clusters HRC in at least zones A-D of the rear platform are initially driven in directions which will move the container toward the right side wall.

The loading and unloading operation of the third embodiment illustrated in Figure 14 is similar to that described in the last paragraph above except that helical rollers in zones Ab-Fb are used to more accurately align the containers. Also, the Figure 14 embodiment, as illustrated is limited to receiving and discharging containers over the left side thereof.

The helical roll sections G and H (Fig. 3) in the front platform 70 are relied upon to align the container against the right side rail 294 and thereafter to center the container with the cargo opening in the aircraft A if needed. It is noted that the initial cost of the second and third embodiments of the invention are considerably reduced due to the elimination of several movable components in the second and third embodiments as compared to those of the first embodiment of the invention.

From the above description it is apparent that the container loader of the first embodiment of the present invention is capable of moving the containers longitudinally in two directions, transversely in two directions, diagonally in four directions, and rotatably about a vertical axis in either direction while on the rear platform. It is also apparent that the different components may be easily removed from the loader and be substituted with other components, all of which are held in stock, depending upon the specific use requirements set forth by the purchaser. Thus, the purchaser may considerably reduce his initial cost by purchasing a loader which performs only those functions which he requires.

Although the best mode contemplated for carrying out the present invention has been herein shown and described, it will be apparent that modification and variation may be made without departing from what is regarded to be the subject matter of the invention.

## Claims

1. A container loader-unloader for moving a container between first and second generally horizontal container supporting surfaces, comprising:
   means defining a front platform movable between a lowered position and a raised position in alignment with said first surface;
   means defining a rear platform movable between a lowered position in horizontal alignment with said second surface and a raised position in alignment with said first surface and said front platform when raised;
   container moving means within each platform limited to rotatable container engaging surfaces with all rotatable surfaces adapted to be driven only about parallel axes; and
   a plurality of power means connected to different ones of said rotatable surfaces for driving said rotatable surfaces in selected directions.

2. An apparatus according to claim 1 wherein said container loader-unloader is an aircraft loader for aircraft having a cargo conveying system therein; and wherein said front and rear platforms are supported on a self propelled mobile vehicle which is positioned adjacent a cargo opening in the aircraft with said front and rear platforms at the same level as said cargo conveying system when a container is transferred between said aircraft loader and said cargo conveying system.

3. An apparatus according to claim 1 wherein certain of said rotatable container engaging surfaces are rotated in directions which will rotate a container supported thereon about a vertical axis.

4. An apparatus according to claim 1 wherein certain of said rotatable container engaging surfaces are rotated in directions which will move a container supported thereon transversely of said platform.

5. An apparatus according to claim 1 wherein certain of said rotatable container engaging surfaces are rotated in directions which will move a container supported thereon longitudinally of said platform.

6. An apparatus according to claim 1 wherein certain of said rotatable container engaging surfaces are rotated in selected directions which will move a container diagonally forward and to the right.

7. An apparatus according to claim 1 wherein certain of said container engaging surfaces are rotated in selected directions which will move the container diagonally forward and to the left.

8. An apparatus according to claim 1 wherein certain of said rotatable container engaging surfaces are rotated in selected directions which will move a container diagonally forward and to the right.

9. An apparatus according to claim 1 wherein certain of said rotatable container engaging surfaces are rotated in selected direction which will move a container supported thereon diagonally forward and to the left.

10. An apparatus according to claim 1 wherein said rear platform means comprises a portion divided into four zones, a plurality of said shafts in each zone, said plurality of power means including a separate selectively controlled power means for each zone with each power means driving the shafts in the associated zone in the same direction and at the same speed, a plurality of helical roll clusters secured to each shaft, each cluster having a plurality of helical rollers freely journaled thereon about axes disposed at an angle of about 45° to its supporting shaft, each diagonally opposed zones having their uppermost rollers angled in the same direction.

11. An apparatus according to claim 10 wherein a container supported on said helical rollers of said four zones is rotated about a vertical axis when said power means are actuated to drive the shafts in both diagonally opposite zones in opposite directions.

12. An apparatus according to claim 10 wherein a container supported on said helical rollers of said four zones is moved longitudinally of said rear platform when said power means drives the shafts in all four zones in the same directions.

13. An apparatus according to claim 10 wherein a container supported on said helical rollers of said four zones is moved diagonally of said rear platform when said power means are actuated to drive said shafts in a first pair of diagonally opposed zones in the same direction while the shafts in a second pair of diagonally opposed zones are held stationary.

14. An apparatus according to claim 12 and additionally comprising a plurality of rollers journaled on said rear platform and extending approximately the full width of said platform, and power means for driving said rollers in the same longitudinal direction as that of said helical rollers.

15. An apparatus according to claim 12 and additionally comprising means defining at least one side guide, means for slidably connecting said side guide to said rear platform for inclined movement between a lowered position permitting the containers to be moved onto or off of said rear platform and a raised position for guiding the container longitudinally of said platform, and a spring extended hydraulically retracted hydraulic cylinder for normally holding said guide in said raised position.

16. An apparatus according to claim 1 and additionally comprising frame means for movably supporting said front and rear platforms, a pair of first guide tracks rigidly secured to said frame, a pair of vertically movable guide tracks slidably received in said first tracks, a transversely extending beam rigidly secured to said movable guide tracks, a second transversely extending beam slidably received in said first guide tracks; a first pair of wheels journaled on said second beam; a large hydraulic cylinder rigidly secured to said first beam and having a first piston rod extending upwardly therefrom; a second pair of spaced wheels rotatably connected to said piston rod; a small pair of hydraulic cylinders rigidly secured to said first beam and having downwardly projecting second piston rods connected to said second beam; first chain means trained over said first wheels and connected to said first beam and said frame means; and second means trained over said second sheave means and connected to said first beam and said rear platform; said large hydraulic cylinder when extending said first piston rod partially raising said rear platform, and said small pair of cylinders when extending said second piston rods raising the rear platform to the level of said front platform.

17. A modular aircraft loader for transferring containers onto or off of a cargo floor of an aircraft, comprising:

a self-propelled mobile vehicle;

a front-platform mounted on said vehicle for movement between a lowered position and a raised position in horizontal alignment with said floor;

a first power operated lift mechanism for moving said front platform between a lowered position and a raised position in alignment with said cargo floor;

first container supporting means on said front platform limited to rotatable container engaging surfaces with all said rotatable surfaces being selectively driven only about horizontal axes disposed transversely of said front platform;

a rear platform mounted on said vehicle for movement between a lower container receiving position and a raised position level with said front platform;

second power operated lift mechanism for raising said rear platform into alignment with said front platform when raised;

second container supporting means within said rear platform limited to rotatable container engaging surfaces with all said rotatable surfaces being selectively driven only about horizontal axes disposed transversely of said rear platform; and

a plurality of rotatable power means connected to different ones of said container supporting surfaces for driving said surfaces in said selected directions.

18. An apparatus according to claim 17 wherein said first container supporting means comprises a plurality of transversely elongated front rollers journaled on said front platform, and a plurality of helical roll clusters journaled on said front platform, said rotatable power means being selectively actuated to drive said container engaging surfaces in directions which will selectively move a container supported thereon forwardly, rearwardly or transversely of said front platform.

19. An apparatus according to claim 17 wherein said second container supporting means comprises a plurality of spaced elongated rear rollers extending transversely of said rear platform and providing sole support of a container when on said rear platform, said rotatable power means being selectively actuated to drive said rear rollers in directions which will move a container forwardly or rearwardly of said front platform.

20. An apparatus according to claim 16 wherein said second container supporting means comprises a plurality of spaced elongated rear rollers extending transversely of said rear platform, and a plurality of rear helical roll clusters journaled on and extending transversely of said rear platform and divided into four zones of helical roll clusters, said rotatable power means being connected to said rear elongated rollers and to said rear helical roll clusters for selectively driving said elongated rollers and said rear helical roll clusters in directions which will drive said container supporting surfaces in a forward and in a rearward direction.

21. An apparatus according to claim 20 wherein said rotatable power means that are connected to said helical roll clusters of said four zones being selectively operated to move a container supported thereon rotatably about a vertical axis, to move transversely of said rear platform in either directions.

22. An apparatus according to claim 17 wherein said rear platform includes a right side wall, a left side wall and a rear wall; when a container is to be selectively loaded onto or off of said rear platform over any one of said walls; said apparatus additionally comprising: power drive rollers journaled on each side wall and end wall for moving the container over an associated wall, vertically movable guide side rails adjacent each side wall and movable between a raised container engaging position and a lowered position enabling the container to move thereover, and an adjustable rear guide rail movable between a raised container engaging position and a lowered position enabling the container to move thereover.

23. An apparatus according to claim 17 wherein said rear platform includes a right side wall, a left side wall and a rear wall; when a plurality of containers are to be loader onto off said platform over only said rear wall; said apparatus additionally comprising a fixed side guide secured to said right side wall and projecting upwardly into position to act as a guide for the containers, and a second fixed side guide secured to the left said wall and projecting upwardly into position to act as a guide for the containers.

24. An apparatus according to claim 17 wherein said rear platform includes a right side wall, a left side wall and a rear wall: when a plurality of containers are to be loaded onto or off said platform over only one of said side walls; said apparatus additionally comprising a fixed side guide secured to the opposite side wall, and another fixed side guide secured to said rear wall, said fixed guides projecting upwardly into position to act as stops and guides for the containers.

25. An apparatus according to claim 17 wherein said front platform includes a wide front end portion rigid with said front platform and a narrow front end portion pivoted on the front of the platform for movement between a horizontal position and a position for adapting the loader to load containers into aircraft having cargo receiving areas of insufficient width to receive the full width of the front platform.

26. An apparatus according to claim 25 and additionally comprising power driven rollers on said wide front portion and on said pivotable narrow front portion.

27. A method of transferring containers between a cargo floor of an aircraft and an area adjacent said loader, said loader including a front platform and a rear platform, each platform including container engaging and supporting means within said platform limited so rotatable container engaging surfaces with all said rotatable surfaces being driven only about horizontal axes disposed transversely of the associated platform; said method comprising the steps of:

elevating said front platform to substantially the same level as said floor of the aircraft;

loading a container onto said rear platform by driving selected ones of said rotatable container engaging surfaces in said rear platform in directions which pull the container onto said rear platform;

orienting the container to the desired position on the rear platform by selectively rotating selected ones of the rotatable container engaging surfaces on the rear platform in directions to turn the container about a vertical axis and to drive the container in either direction transversely of the rear platform;

elevating the rear platform to the level of the front platform; and

driving the properly oriented container onto the cargo floor of the aircraft by selectively driving the rotatable container engaging surfaces about said horizontal axes in directions which will move the container over said rear platform and said front platform onto the cargo floor of the aircraft.

28. A method according to claim 27 wherein said front and rear platforms include side guides, and additionally comprising the step of rotating certain of said rotatable container engaging surfaces on said front platform in opposite directions from moving the container transversely into sliding contact with one of the front side guides for guiding the container into the aircraft.

29. A method according to claim 27 wherein the rotatable container engaging surfaces of said rear platform include four zones of helical roll clusters with a plurality of transverse shafts in each zone and with all shafts being parallel, each shaft having a plurality of helical roll clusters journaled thereon: said method additionally including the step of driving all shafts in all zones in the same direction to move the container when supported thereon longitudinally of the platform in a first direction.

30. A method according to claim 27 wherein the rotatable container engaging surfaces of said rear platform include four zones of helical roll cluster with a plurality of transverse shafts in each zone and with all shafts being parallel, each shaft having a plurality of helical roll clusters journaled thereon: said method additionally including the step of driving all shafts in a first pair of diagonally opposed zones in opposite directions and driving a second pair of shafts in diagonally opposed zones in opposite directions with the shafts in longitudinally spaced zones being driven in the same direction thereby rotating the container when supported thereon about a vertical axis.

31. A method according to claim 27 wherein the rotatable container engaging surfaces of said rear platform include four zones of helical roll clusters with a plurality of transverse shafts in each zone and with all shafts being parallel, each shaft having a plurality of helical roll clusters journaled thereon: said method additionally including the step of driving all shafts in one diagonal pair of zones in the same direction while holding all shafts in the other diagonally opposed zones stationary thereby moving the container when supported thereon diagonally of the rear platform.

FIG_1

0 276 851

FIG_2

A

20

74

296 70 30 28 40 177a M9 150 162 164 152 174 178
290 100 90 62 49 104 55 102
71 42
84 68 54
82 80 64 44 46
78 66 60a
76 59 47
69 322
88 86 48 50
92 22
94
32 24 32 53 26 52 32

0 276 851

**FIG_3**

0 276 851

FIG_4

FIG_5

FIG_6

177a  146  108  166  148  164  166  110  166  M9  158b  168  154  150  146  148  158a  168  169  148  104  102  171  172  116  152  168  146  118  115  177  158  154

0 276 851

FIG_7

FIG_8

# FIG_9

# FIG_10   FIG_11   FIG_12

## FIG_13

177a    40a    177    20a    122a    M10a

174a

178a

142a

122a

177a    42a    142a    177    142a

## FIG_14

177a    40b    177    20b

174b

122b    Eb    Ab    Bb

142b    Fb    Cb    Db

177a

150b    152b    164b